# EUROPÄISCHE PATENTANMELDUNG

(11) **EP 2 143 540 A1**
(43) Veröffentlichungstag der Anmeldung: **13.01.2010**
(21) Anmeldenummer: 09008664.6
(22) Anmeldetag: 02.07.2009
(51) Int. Cl.: B29C 45/17, B29C 45/50

(54) **Spritzgießeinheit für eine Spritzgießmaschine sowie zugehöriges Fördermittel**

(30) Priorität: 10.07.2008 DE 102008032670
(71) Anmelder: Hehl, Karl, 72290 Lossburg (DE)
(72) Erfinder: Hehl, Karl, 72290 Lossburg (DE)
(74) Vertreter: Reinhardt, Harry

(57) **Zusammenfassung**

Eine Spritzgießeinheit für eine Spritzgießmaschine zur Verarbeitung von Kunststoffen weist einen Plastifizierzylinder (10) zur Aufnahme eines Fördermittels (11) auf, das mit einem Einspritzmechanismus (E) zum axialen Bewegen des Fördermittels (11) im Plastifizierzylinder (10) und einem Rotationsmotor (R) zum Rotieren des Fördermittels (11) über ein Mitnahmeelement (12 in Wirkverbindung steht. Das Fördermittel (11) wiest einen ersten Abschnitt (11 a) zum Eingriff in ein Kupplungsmittel (13) für die Axialbewegung und einen zweiten Abschnitt (11 b) zum Eingriff in die Rotationsmitnahme (12b) auf, die in axialer Förderichtung des Fördermittels (11) zueinander versetzt sind. Dadurch, dass die Rotationsmitnahme (12b) in Förderrichtung des Fördermittels (11) nach der Mitnahme (12a) angeordnet ist, sind Spritzgießeinheit sowie das zugehörige Fördermittel auch steigenden Anforderungen gewachsen.

## Beschreibung

### Gebiet der Erfindung

Die Erfindung betrifft eine Spritzgießeinheit für eine Spritzgießmaschine zur Verarbeitung von Kunststoffen und anderer plastifizierbarer Massen wie pulverförmige, metallische oder keramische Massen nach dem Oberbegriff des Anspruches 1 sowie ein zugehöriges Fördermittel nach dem Oberbegriff des Anspruches 9.

### Stand der Technik

Eine derartige Spritzgießeinheit und ein derartiges Fördermittel sind aus der DE 42 36 282 C1 bekannt, wobei dort ein Fördermittel in einem in einem Trägerblock aufgenommenen Plastifizierzylinder vorgesehen ist, wobei ein Anschlussbereich des Fördermittels rückseitig aus dem Trägerblock heraus ragt und dort mit einem Mitnahmeelement in Verbindung steht. In Förderrichtung ist zunächst ein Bereich geringen Querschnitts als Rotationsmitnahme vorgesehen, auf den die Rotation übertragen wird, an den sich in Förderrichtung vorgelagert ein Bereich anschließt, an dem eine Kupplung für die Axialbewegung, also für den Anschluss eines Einspritzmechanismus als Mitnahme vorgesehen ist. Dabei vergrößert sich der Querschnitt ausgehend von der Rotationsmitnahme über die Mitnahme bis zum Anschlussbereich, wobei der Außendurchmesser des Schneckengangs nochmals deutlich größer ist. Diese Querschnittsverringerung in Richtung auf die Rotationsaufnahme ist von Vorteil, um die bei der axialen Bewegung während der Dekompression erforderlichen Kräfte aufzubringen, jedoch nicht optimal für die Aufbringung großer Drehmomente.

Beim Spritzgießen wird das zu plastifizierende Material in der Plastifiziereinheit mittels eines Fördermittels vorzugsweise in Form einer Förderschnecke unter Wärmezufuhr aufbereitet und vor die Förderschnecke befördert. Bei diesem Vorgang zieht sich die Förderschnecke infolge des Materialdrucks zurück, bis die einzuspritzende Menge vor der Förderschnecke vorhanden ist. Vorzugsweise durch Rotation wird das Material vor die Förderschnecke befördert. Beim anschließenden Einspritzen erfolgt dann eine axiale Bewegung, mit der das vor der Förderschnecke befindliche Material in den Formhohlraum einer Spritzgießform eingespritzt wird. Rotations- und Axialbewegung sind also grundsätzlich erforderlich.

Die heutzutage verarbeiteten Kunststoffe stellen sowohl hinsichtlich des Temperaturbereichs und damit auch hinsichtlich der damit verbundenen Spannungen ständig steigende technologische Anforderungen auch an die Hardware der Spritzgießmaschine. Zudem steigen die aufzubringenden rotatorischen Kräfte im Vergleich zu den aufzubringenden axialen Kräften, sodass es immer wieder zu Beschädigungen der Anschlusselemente der Schnecke kommt.

### Aufgabe der Erfindung

Ausgehend von diesem Stand der Technik liegt der vorliegenden Erfindung die Aufgabe zugrunde, eine Spritzgießeinheit der eingangs genannten Gattung sowie ein zugehöriges Fördermittel dahingehend zu verbessern, dass sie auch steigenden Anforderungen gewachsen ist.

Diese Aufgabe wird durch eine Spritzgießeinheit mit den Merkmalen des Anspruches 1 sowie durch ein Fördermittel mit den Merkmalen des Anspruches 9 gelöst.

An Spritzgießeinheit und Förderschnecke sind wie im Stand der Technik eine Rotationsmitnahme und eine Mitnahme zur axialen Bewegung vorgesehen, wobei jedoch die Rotationsmitnahme möglichst nahe an den Schneckengang versetzt ist. Die Einleitung der Einspritzkraft ist von der Belastungsseite her meist geringer und wird durch entsprechende Hinterschnitte, welche zur Dekompression, also zur Axialbewegung der Förderschnecke notwendig sind, erst nach der Querschnittsschwächung für die Einleitung der Dekompression vorgenommen. Durch das Verlegen der Rotationsmitnahme in Förderrichtung des Fördermittels hinter die Mitnahme für die axiale Bewegung des Fördermittels und damit vorzugsweise bei einer Förderschnecke in Richtung auf den Schneckengang können die beim Einbringen des Drehmoments auftretenden Spannungen am größtmöglichen Durchmesser und somit äußerst spannungsarm in das System geleitet werden. Gleichzeitig ergibt sich ein deutlich einfacherer Aufbau, da die Kupplungsmittel für den Anschluss der Einspritzkraft besser zu positionieren sind. Dies gestattet gleichzeitig, das Kupplungssystem aus weniger Einzelteilen herzustellen.

Vorzugsweise greift die Rotationsmitnahme am Außendurchmesser der Schnecke an, da keine Querschnittsschwächungen am Ende des Fördermittels bzw. der Förderschnecke vorgenommen werden müssen.

Weitere Vorteile ergeben sich aus den Unteransprüchen und der nachfolgenden Beschreibung anhand eines Ausführungsbeispiels.

### Kurzbeschreibung der Figuren

Im Folgenden wird die Erfindung anhand einem in den beigefügten Figuren dargestellten Ausführungsbeispiel näher erläutert. Es zeigen:
- Fig. 1: eine schematische Seitenansicht einer Spritzgießmaschine,
- Fig. 2: einen vergrößerten Ausschnitt im Bereich des Mitnahmeelements,
- Fig. 3: eine Explosionsdarstellung im Bereich des Mitnahmeelements,
- Fig. 4: eine Seitenansicht des Fördermittels.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

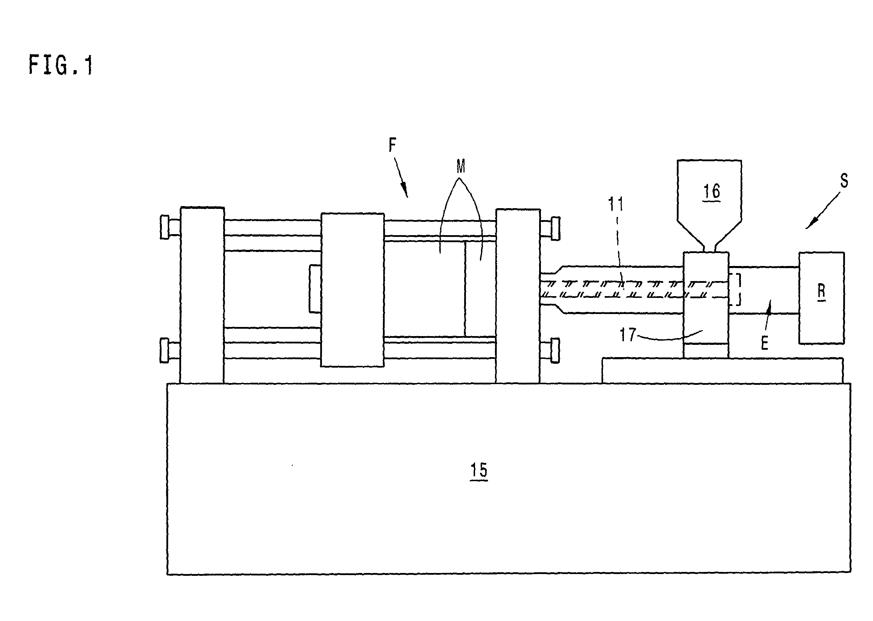

Figur 1 zeigt eine Spritzgießeinheit S für eine Spritzgießmaschine zur Verarbeitung von Kunststoffen und anderer plastifizierbarer Massen wie pulverförmige, metallische oder keramische Massen. Die Spritzgießeinheit S befindet sich auf einem Maschinenfuß 15, auf dem auch eine Formschließeinheit F angeordnet ist. Durch zyklisches Bewegen eines Fördermittels 11 gelangt das über einen Vorratsbehälter 16 zur Verfügung gestellte Material nach entsprechender Aufbereitung unter Zusammenwirken eines Einspritzmechanismus und eines Rotationsmotors in einen zeichnerisch nicht dargestellten Formhohlraum einer in der Formschließeinheit F aufgenommenen Spritzgießform M. Der Aufbau von Einspritzmechanismus und Rotationsmotor R ist dem Fachmann geläufig, sodass im Folgenden hierauf nicht weiter eingegangen wird.

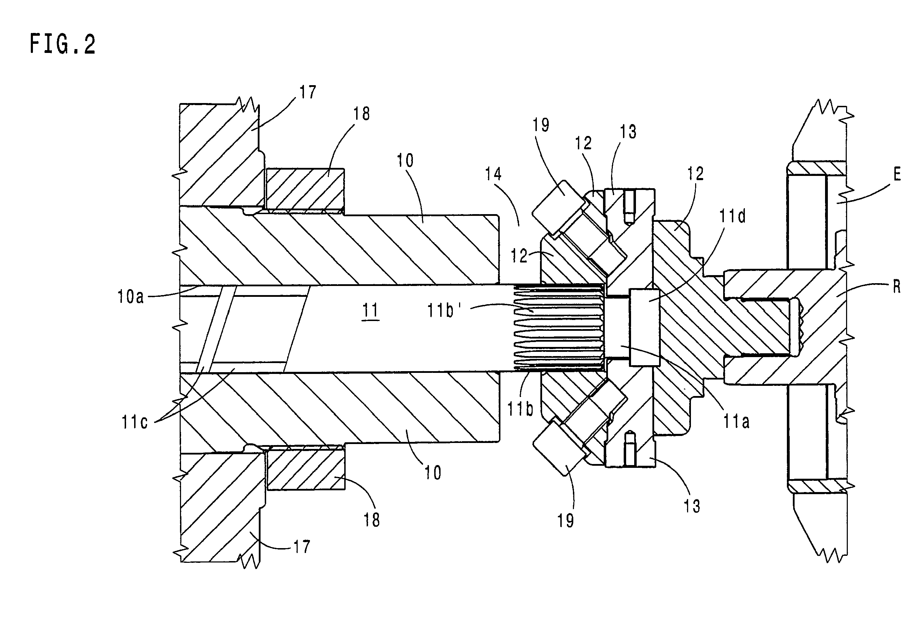

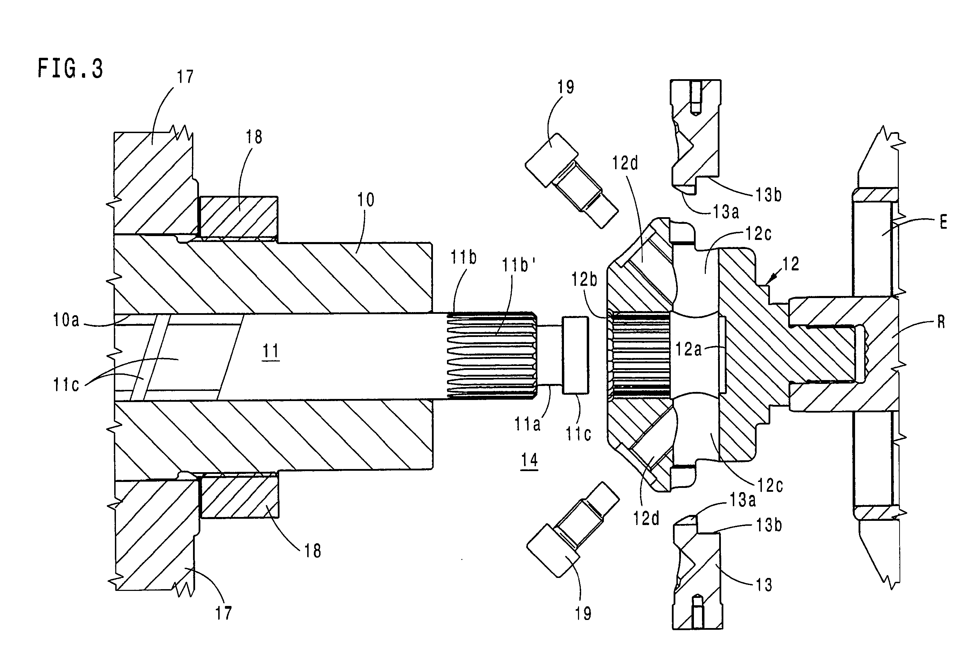

Die Figuren 2 und 3 zeigen einen vergrößerten Ausschnitt F2 von Fig. 1. Dort ist ein Fördermittel 11, vorzugsweise eine Förderschnecke zu sehen, die zum Fördern des plastifizierbaren Materials in den Hohlraum einer in der Formschließeinheit F aufgenommenen Spritzgießform M bestimmt ist. Das Fördermittel ist in einem Plastifizierzylinder 10 aufgenommen, der am Trägerblock 17 mittels eines Befestigungsmittels 18 befestigt ist. Rückseitig ragt das Fördermittel mit einem Anschlussbereich aus dem Plastifizierzylinder 10 heraus, der an entsprechenden Antriebseinheiten angeschlossen werden kann. Bei diesen Antriebseinheiten handelt es sich einerseits um den Einspritzmechanismus E, der zum axialen Vorwärts- und Zurückbewegen des Fördermittels 11 bei der zyklischen Aufbereitung und zum Einspritzen der plastifizierbaren Masse in den Formhohlraum vorgesehen ist. Ferner ist ein Rotationsmotor R zum bedarfsweisen Rotieren des Fördermittels 11 vorgesehen, um z. B. das plastifizierbare Material beim Dosieren vor das Fördermittel 11 zu befördern. Die Figuren 2 und 3 zeigen ein Mitnahmeelement 12, das eine Aufnahme 12a zur Wirkverbindung mit dem Einspritzmechanismus E zur axialen Bewegung des Fördermittels 11 und eine Rotationsmitnahme 12b zur Wirkverbindung mit dem Rotationsmotor R zum bedarfsweisen Rotieren des Fördermittels 11 aufweist. Das Fördermittel 11 ist am Mitnahmeelement 12 zur Mitnahme anschließbar.

Kupplungsmittel 13 in Form von zwei Kupplungselementen sind zum lösbaren axialen Ankuppeln des Fördermittels 11 am Mitnahmeelement 12 angeordnet und dort in Ausnehmungen 12c geführt. Das Fördermittel 11 weist einen ersten Abschnitt 11a zum Eingriff der Kupplungsmittel 13 zur axialen Bewegung und einen zweiten Abschnitt 11b zum Eingriff in die Rotationsmitnahme 12b auf, die in axialer Förderrichtung des Fördermittels 11 zueinander versetzt sind. Gemäß den Figuren 2 und 3 ist die Rotationsmitnahme 12b in Förderrichtung des Fördermittels 11 nach der Mitnahme 12a angeordnet, sodass das Drehmoment nahe des eigentlichen Fördermittels, also nahe der Plastifiziereinheit oder bei einer Förderschnecke nahe des Schneckengangs 12c eingebracht werden kann. Die Rotationsmitnahme 12b greift vorzugsweise am Außendurchmesser des Fördermittels 11 an, da dort die Kräfte am spannungsärmsten eingebracht werden können. Fig. 2 und 3 zeigen, dass in diesem Bereich eine Verzahnung 11b' angeordnet ist, die einen Außendurchmesser aufweist, der etwa dem Außendurchmesser des Fördermittels 11 entspricht,.

Der zweite Abschnitt 11b des Fördermittels liegt gemäß Fig. 3 beim Einbau in das Mitnahmeelement 12 in einem einsehbaren Bereich 14 zwischen Plastifizierzylinder 10 und Mitnahmeelement 12, sodass der Einbau erleichtert wird, da das Montagepersonal die Orientierung der Verzahnung 11b' deutlich erkennen kann, sodass Beschädigungen beim Einbau der Schnecke in das Mitnahmeelement 12 vermeidbar sind. Dies wird dadurch weiter erleichtert, dass durch die Anordnung der Rotationsmitnahme 12b in Förderrichtung vor der Mitnahme 12a auch diese von außen einsehbar ist.

Das Mitnahmeelement 12 weist die Kupplungsmittel 13 für den Eingriff in den ersten Abschnitt 11a des Fördermittels 11 hinter der Rotationsaufnahme 12b auf. Fig. 2 und 3 zeigen, dass das Mitnahmeelement 12 einstückig ist, wobei es in seinem vorderen Bereich die Rotationsaufnahme 12b aufweist, die eine zur Verzahnung 11b' gegengleiche Verzahnung aufweist, wobei dahinter der Bereich der Aufnahme 12a vorgesehen ist, der gleichzeitig als Zentrierung ausgebildet ist. Fig. 3 zeigt, dass die Kupplungsmittel Zentriermittel 13a und einen zurückgesetzten Bereich 13b aufweisen. Im zusammengebauten Zustand gemäß Fig. 2 greifen die Zentriermittel 13a in den ersten Abschnitt 11a ein, während der zurückgesetzte Bereich 13b an einem Bereich größeren Durchmessers 11d zur Anlage kommt. Dadurch wird der erforderliche Hinterschnitt für die Dekompressionsphase gebildet. Das Mitnahmeelement 12, das rückseitig mit einer vom Rotationsmotor kommenden Welle, die im Ausführungsbeispiel lediglich als Rotationsmotor R gekennzeichnet ist, in Eingriff steht weist Bohrungen 12d auf, die für die Befestigungsmittel 19 bestimmt sind, die mit ihrer stirnseitigen Flächen an entsprechenden Abstützflächen der Kupplungsmittel 13 angreifen und diese festlegen.

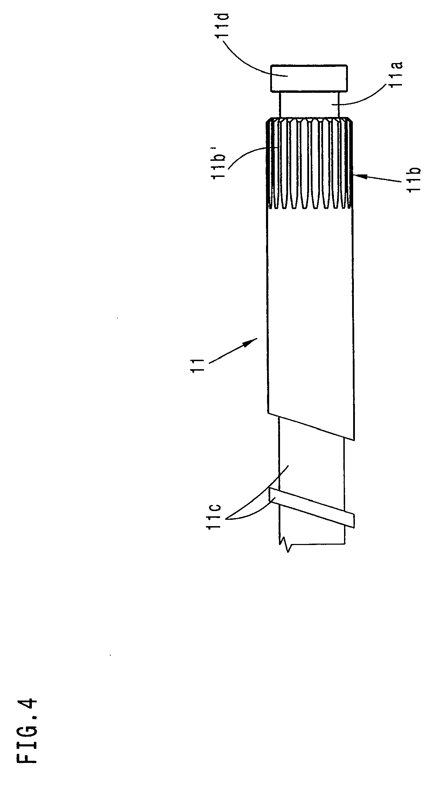

Fig. 4 zeigt das zugehörige Fördermittel, das vorzugsweise eine Förderschnecke mit einem Schneckengang 11c ist. Das Fördermittel 11 weist einen ersten Abschnitt 11a zur Wirkverbindung mit einem Kupplungsmittel 13 zur axialen Ankopplung auf, die von einem Einspritzmechanismus E axial bewegt wird. Das Fördermittel weist ferner einen zweiten Abschnitt 11b zur Wirkverbindung mit einer Rotationsmitnahme 12b auf, die von einem Rotationsmotor R rotiert wird. In Förderrichtung des Fördermittels 11 ist der zweite Abschnitt 11b nach dem ersten Abschnitt 11a angeordnet. Der zweite Abschnitt 11b ist vorzugsweise dem Schneckengang 11c benachbart und durch eine Verzahnung 11b' am Umfang des Fördermittels 11 gebildet. Vorzugsweise ist der Außendurchmesser des Fördermittels 11 im Bereich des zweiten Abschnitts 11b etwa so groß wie der Außendurchmesser des Schneckengangs 11c. Rückseitig ist der erste Abschnitt 11a des Fördermittels 11 durch einen Bereich geringeren Querschnitts vorzugsweise mit einem geringeren Durchmesser gebildet, an den sich rückseitig entgegen der Förderrichtung ein Bereich 11d größeren Querschnitts vorzugsweise mit einem größeren Durchmesser anschließt, der bis zum Außendurchmesser des Schneckengangs 11 des Fördermittels reichen kann.

### Bezugszeichenliste

- 10: Plastifizierzylinder
- 10a: Aufnahmebereich
- 11: Fördermittel
- 11a: erster Abschnitt für 12a
- 11b: zweiter Abschnitt für 12b
- 11b': Verzahnung
- 11c: Schneckengang
- 11d: Bereich größeren Querschnitts
- 12: Mitnahmeelement
- 12a: Aufnahme
- 12b: Rotationsmitnahme
- 12c: Ausnehmung für 13
- 12d: Bohrung für 19
- 13: Kupplungsmittel
- 13a: Zentriermittel
- 13b: zurückgesetzter Bereich
- 14: einsehbarer Bereich
- 15: Maschinenfuß
- 16: Vorratsbehälter
- 17: Trägerblock
- 18, 19: Befestigungsmittel
- E: Einspritzmechanismus
- F: Formschließeinheit
- M: Spritzgießform
- R: Rotationsmotor
- S: Spritzgießeinheit

## Patentansprüche

1. Spritzgießeinheit (S) für eine Spritzgießmaschine zur Verarbeitung von Kunststoffen und anderen plastifizierbaren Massen wie pulverförmige, metallische oder keramische Massen mit
- einem Fördermittel (11) zum Fördern von plastifizierbarem Material,
- einem Plastifizierzylinder (10) zur Aufnahme des Fördermittels (11),
- einem Einspritzmechanismus (E) zum axialen Vorwärts- und Zurückbewegen des Fördermittels (11) im Plastifizierzylinder (10),
- einem Rotationsmotor (R) zum bedarfsweisen Rotieren des Fördermittels (11),
- einem Mitnahmeelement (12), das mit dem Einspritzmechanismus (E) zur axialen Bewegung in Wirkverbindung steht und eine Rotationsmitnahme (12b) aufweist, die mit dem Rotationsmotor (R) zum bedarfsweisen Rotieren des Mitnahmeelements in Wirkverbindung steht und an dem das Fördermittel (11) zur Mitnahme anschließbar ist,
- wenigstens einem Kupplungsmittel (13) zum lösbaren axialen Ankuppeln des Fördermittels (11) am Mitnahmeelement (12),
- wobei das Fördermittel (11) einen ersten Abschnitt (11a) zum Eingriff in das wenigstens eine Kupplungsmittel (13) und einen zweiten Abschnitt (11b) zum Eingriff in die Rotationsmitnahme (12b) aufweist, die in axialer Förderichtung des Fördermittels (11) zueinander versetzt sind,
**dadurch gekennzeichnet, dass** die Rotationsmitnahme (12b) in Förderrichtung des Fördermittels (11) nach der Aufnahme (12a) angeordnet ist.

2. Spritzgießeinheit nach Anspruch 1, **dadurch gekennzeichnet, dass** die Rotationsmitnahme (12b) am Außendurchmesser des Fördermittels (11) angreift.

3. Spritzgießeinheit nach Anspruch 1 oder 2, **dadurch gekennzeichnet, dass** die Rotationsmitnahme (12b) durch eine Verzahnung gebildet ist.

4. Spritzgießeinheit nach einem der vorhergehenden Ansprüche, **dadurch gekennzeichnet, dass** der zweite Abschnitt (11b) des vorzugsweise als Förderschnecke ausgebildeten Fördermittels (11) beim Einbau in das Mitnahmeelement (12) in einem einsehbaren Bereich (14) zwischen Plastifiziereinheit (10) und Mitnahmeelement (12) zu liegen kommt, in dem auch die Rotationsmitnahme (12b) einsehbar ist.

5. Spritzgießeinheit nach einem der vorhergehenden Ansprüche, **dadurch gekennzeichnet, dass** das Mitnahmeelement (12) die Kupplungsmittel (13) für den Eingriff in den ersten Abschnitt (11a) des Fördermittels (11) hinter der Rotationsmitnahme (12b) aufnimmt.

6. Spritzgießeinheit nach einem der vorhergehenden Ansprüche, **dadurch gekennzeichnet, dass** das Mitnahmeelement (12), das die Rotationsmitnahme (12b) und die Aufnahme (12a) aufweist, einstückig ist.

7. Spritzgießeinheit nach einem der vorhergehenden Ansprüche, **dadurch gekennzeichnet, dass** der erste Abschnitt (11a) für die axiale Mitnahme am Fördermittel (11) durch einen Bereich geringeren Querschnitts vorzugsweise mit geringerem Durchmesser gebildet ist.

8. Fördermittel für eine Spritzgießeinheit an einer Spritzgießmaschine zur Verarbeitung von Kunststoffen und anderen plastifizierbaren Massen wie pulverförmige, metallische oder keramische Massen mit
- einem ersten Abschnitt (11a) zur Wirkverbindung mit einer axialen Aufnahme eines Einspritzmechanismus (E) und
- einem zweiten Abschnitt (11b) zur Wirkverbindung mit einer Rotationsmitnahme (12b),
**dadurch gekennzeichnet, dass** in Förderrichtung des Fördermittels (11) der zweite Abschnitt (11b) vor dem ersten Abschnitt (11a) angeordnet ist.

9. Fördermittel nach Anspruch 8, **dadurch gekennzeichnet, dass** das Fördermittel (11) eine Förderschnecke mit einem in einem Plastifizierzylinder (10) aufnehmbaren Schneckengang (11c) ist und das der zweite Abschnitt (11b) dem Schneckengang (11c) benachbart ist.

10. Fördermittel nach Anspruch 8 oder 9, **dadurch gekennzeichnet, dass** der zweite Abschnitt (11b) durch eine Verzahnung (11b') am Umfang des Fördermittels (11) gebildet ist.

11. Fördermittel nach einem der Ansprüche 8 bis 10, **dadurch gekennzeichnet, dass** der erste Abschnitt (11a) des Fördermittels (11) durch einen Bereich geringeren Querschnitts vorzugsweise mit geringerem Durchmesser gebildet ist, an den sich rückseitig entgegen der Förderrichtung des Fördermittels (11) ein Bereich (11d) größeren Querschnitts anschließt.
